# FASCICULE DE BREVET EUROPEEN

(11) **EP 0 521 755 B1**
(45) Date de publication et mention de la délivrance du brevet: **18.09.1996**
(21) Numéro de dépôt: 92401793.2
(22) Date de dépôt: 25.06.1992
(51) Int. Cl.: B29C 65/10, B29C 65/12, B29C 65/42

(54) **Procédé de soudage de matériaux thermoplastiques avec projection de gaz chaud**
Verfahren zum Schweissen von thermoplastischen Materialien durch Anblasen mit warmem Gas
Process for welding thermoplastic materials by the projection of hot gas

(30) Priorité: 25.06.1991 FR 9107768
(43) Date de publication de la demande: 07.01.1993
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR); LA SOUDURE AUTOGENE FRANCAISE, F-75007 Paris (FR)
(72) Inventeur: Marlin, Pascal, F-14610 Cambes en Plaine (FR)
(74) Mandataire: Caen, Thierry Alain

(56) Documents cités:
- DE-A- 3 609 775
- FR-A- 2 009 427
- US-A- 2 220 545
- US-A- 2 423 237
- US-A- 2 786 511
- US-A- 3 397 815
- US-A- 3 839 126
- PATENT ABSTRACTS OF JAPAN vol. 010, no. 326 (M-532)(2382) 6 Septembre 1986 & JP-A-61 134 222 (NISSAN MOTOR CO LTD) 21 Juin 1986
- PATENT ABSTRACTS OF JAPAN vol. 009, no. 029 (M-356)7 Février 1985 & JP-A-59 174 315 (HITACHI ZOSEN KK) 2 Octobre 1984
- KIRK OTHMER 'ENCYCLOPEDIA OF CHEMICAL TECHNOLOGY' 1980 , WHILEY , NEW YORK (troisième édition Vol 12) (ISBN 0-471-02065-6)

## Description

La présente invention concerne les procédés de soudage d'au moins deux éléments en matériau thermoplastique comportant l'étape de projeter sur la zone de soudage un gaz de projection neutre chaud.

Un procédé de ce type est décrit dans le document US-A-2.220.545.

En pratique, pour les procédés de soudage de ce type, on distingue aujourd'hui deux grandes familles de procédés :
- les procédés de soudage par chalumeau et soudeuse par extrusion, réalisés avec apport de matière et chauffage électrique. Dans ces procédés manuels à vitesse de soudage lente, le gaz projeté est classiquement de l'air comprimé ;
- les procédés de soudage par génération de gaz chaud par une flamme, généralement utilisés sans apport de matière et pour des applications à grande vitesse (quelques mètres/minute) essentiellement pour la formation d'enroulements filamentaires. De par l'usage de gaz combustibles et de la formation de flammes, ce procédé doit être mis en oeuvre dans des locaux de sécurité et ne convient pas à des opérations in situ ou dans des environnements présentant des risques de déflagration.

La présente invention a pour objet des perfectionnements aux différents procédés de soudage ci-dessus permettant d'augmenter les vitesses de soudage tout en conservant les caractéristiques mécaniques du joint soudé, en éliminant les risques d'oxydation des matériaux traités et permettant d'opérer dans des conditions de sécurité totale, en nécessitant des moyens de stockage de gaz simplifiés et convenant notamment à des interventions in situ, y compris dans des environnements dangereux.

Pour ce faire, selon une caractéristique de l'invention, le gaz de projection comprend au moins 20 % d'hélium, typiquement au moins 30 %, de préférence au moins 90 %, le complément étant un gaz neutre ou un mélange de gaz neutres, typiquement l'azote et/ou l'argon.

Selon une caractéristique plus particulière de l'invention, pour l'assemblage d'éléments avec cordon de soudage, le gaz de projection est chauffé à une température entre 200 et 350°C, par exemple par voie électrique.

Selon une autre caractéristique de l'invention, pour la formation d'enroulements filamentaires, le gaz de projection est chauffé à une température supérieure à 700°C, typiquement supérieure à 1000°C, par exemple par un plasma ou par un four solaire.

D'autres caractéristiques et avantages de la présente invention ressortiront de la description suivante de modes de réalisation donnés à titre illustratif mais nullement limitatif, faite en relation avec les dessins annexés sur lesquels :
- la figure 1 est une vue schématique d'une installation de soudage à extrusion mettant en oeuvre le procédé selon l'invention, et
- la figure 2 est une vue schématique d'une installation de soudage pour la formation d'enroulements filamentaires pour la mise en oeuvre du procédé selon l'invention.

Dans la description qui va suivre et sur les dessins, les éléments identiques ou analogues portent les mêmes chiffres de référence, éventuellement indicés.

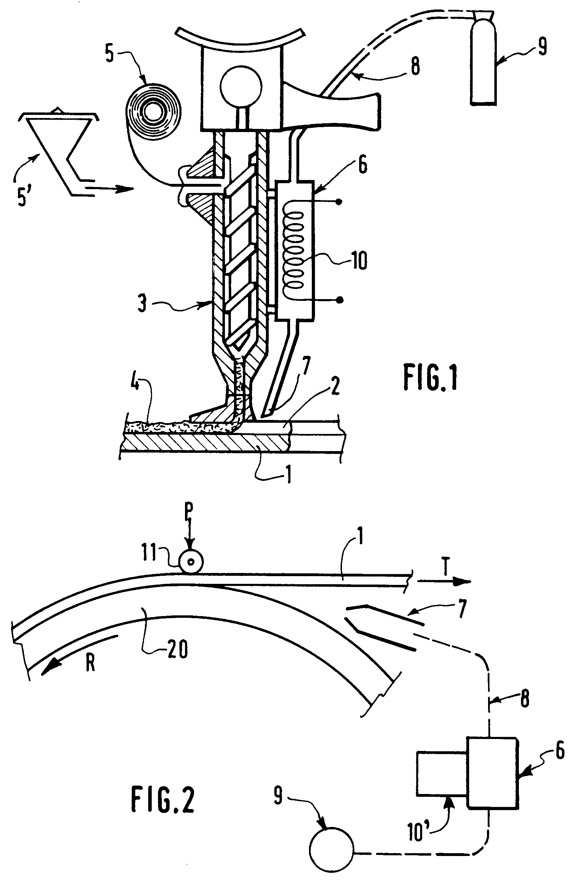

On reconnaît sur la figure 1 une soudeuse par extrusion de cordon, par exemple pour l'assemblage en bout de plaques 1 et 2 en matériau thermoplastique tel que des polyoléfines, le PVC, le PVDF ou certains PTFE. La soudeuse comprend typiquement un corps d'extrudeuse 3 délivrant, à la jointure entre les plaques 1 et 2, un cordon de soudure 4 en même matériau thermoplastique que les plaques 1 et 2 provenant d'une bobine de fil 5 ou d'un réservoir de granulés 5′. Au corps d'extrudeuse 3 est associée une chambre de chauffe 6 reliée à une buse 7 de projection d'un gaz chaud en amont du patin de l'extrudeuse 3 et alimentée par une canalisation 8, à partir d'un conteneur de gaz sous pression 9. Selon l'invention, le gaz dans le conteneur 9 et projeté par la buse 7 comprend au moins 20 % d'hélium, le complément étant un gaz neutre ou un mélange de gaz neutres tel que l'azote et/ou l'argon. Dans ce mode de réalisation, le gaz est chauffé dans la chambre 6 par une résistance électrique reliée à la source d'alimentation de l'extrudeuse pour y être chauffé à une température comprise entre 200 et 350°C selon les matériaux thermoplastiques à assembler et le débit de gaz qui est typiquement compris entre 3 m³/heure et 30 m³/heure, selon la teneur en hélium. Les meilleures performances sont obtenues avec un gaz constitué d'hélium pur mais des performances significatives sont obtenues à partir de 20 % d'hélium, la plage 30 à 50 % d'hélium étant une plage particulièrement économique.

Dans le procédé selon la figure 2, convenant plus particulièrement, pour la réalisation de tubulures renforcées ou de conteneurs, une pièce cylindrique à revêtir ou un mandrin extractible 20 est revêtu périphériquement d'une série de couches d'enroulements filamentaires au moyen d'un ruban 1 constitué d'une nappe de fibres longues de renforcement dans une matrice en matériau thermoplastique technique, notamment en polyamide ou en polyéthers.

La pièce à revêtir 20, généralement revêtue initialement d'une sous-couche plastique, est animée d'un mouvement de déplacement suivant la flèche R et le ruban 1 est appliqué, suivant des angles inversés pour former un bobinage, en étant soumis à une traction T dans la direction opposée au déplacement R, éventuellement avec application d'une pression de soudage P, par exemple au moyen d'un galet presseur 11. La buse de projection 7 est agencée pour projeter un gaz à haute température sur la zone de soudage entre le ruban 1 et la pièce 20. Selon l'invention, le gaz de projection, en provenance d'un conteneur ou réservoir de gaz sous pression 9, comprend, comme précédemment, au moins 20 % d'hélium, le complément étant un gaz neutre ou un mélange de gaz neutres, la teneur en hélium, pour ce type d'applications étant avantageusement supérieure à 80 %, typiquement supérieure à 90 %. Le gaz, acheminé par la canalisation 8, traverse la chambre de chauffe 6 où il est porté à une température supérieure à 700°C, en pratique supérieure à 1000°C, de préférence supérieure à 2000°C, de préférence par un générateur de plasma (10′), avantageusement hélium-argon utilisant le gaz dans le conteneur 9, ou dans les régions désertiques, par un four solaire. Le débit de gaz projeté est compris entre 1 et 30 m³/heure selon la température disponible dans la chambre de chauffe 6.

Quoique la présente invention ait été décrite en relation avec un mode de réalisation particulier, elle ne s'en trouve pas limitée mais est au contraire susceptible de modifications et de variantes qui apparaîtront à l'homme de l'art, dans la limite du libellé des revendications

## Revendications

1. Procédé de soudage d'au moins deux éléments (1;2,20) en matériaux thermoplastiques comprenant l'étape de projeter sur la zone de soudage un gaz inerte chaud, caractérisé en ce que le gaz de projection comprend au moins 20 % d'hélium, le complément étant un gaz neutre ou un mélange de gaz neutres.

2. Procédé selon la revendication 1, caractérisé en ce que le gaz de projection comprend au moins 30 % d'hélium.

3. Procédé selon la revendication 2, caractérisé en ce que le gaz de projection comprend au moins 90 % d'hélium.

4. Procédé selon l'une des revendications 1 à 3, pour l'assemblage d'éléments avec cordon de soudage (4), caractérisé en ce que le gaz de projection est chauffé à une température entre 200 et 350°C.

5. Procédé selon l'une des revendications 1 à 3 pour la formation d'enroulements filamentaires (1), caractérisé en ce que le gaz de projection est chauffé à une température supérieure à 700°C.

6. Procédé selon l'une des revendications 1 à 5, caractérisé en ce que le gaz de projection est chauffé électriquement (10, 10′).

7. Procédé selon la revendication 5, caractérisé en ce que le gaz de projection est chauffé à une température comprise entre 1000 et 3000°C.

8. Procédé selon la revendication 7, caractérisé en ce que le gaz de projection est chauffé par un générateur de plasma (10′).

9. Procédé selon la revendication 7, caractérisé en ce que le gaz de projection est chauffé par un four solaire (10′).

10. Procédé selon l'une des revendications 1 à 9, caractérisé en ce que le gaz de projection est fourni à partir d'un conteneur de gaz sous pression (9).

## Claims

1. Process for welding at least two elements (1; 2, 20) of thermoplastics materials comprising the stage of projecting a hot inert gas onto the welding zone, characterized in that the projection gas comprises at least 20% helium, the remainder being a neutral gas or a mixture of neutral gases.

2. Process according to Claim 1, characterized in that the projection gas comprises at least 30% helium.

3. Process according to Claim 2, characterized in that the projection gas comprises at least 90% helium.

4. Process according to one of Claims 1 to 3, for the assembly of elements with welding bead (4), characterized in that the projection gas is heated to a temperature of between 200 and 350 °C.

5. Process according to one of Claims 1 to 3 for the formation of filament windings (1), characterized in that the projection gas is heated to a temperature exceeding 700 °C.

6. Process according to one of Claims 1 to 5, characterized in that the projection gas is heated electrically (10, 10').

7. Process according to Claim 5, characterized in that the projection gas is heated to a temperature between 1000 and 3000 °C inclusive.

8. Process according to Claim 7, characterized in that the projection gas is heated by a plasma generator (10').

9. Process according to Claim 7, characterized in that the projection gas is heated by a solar furnace (10').

10. Process according to one of Claims 1 to 9, characterized in that the projection gas is supplied from a pressurized gas container (9).

## Patentansprüche

1. Verfahren zum Verschweißen von mindestens zwei Teilen (1; 2, 20) aus thermoplastischen Werkstoffen, mit dem Verfahrensschritt, den Schweißbereich mit einem heißen Inertgas anzublasen, **dadurch gekennzeichnet**, daß das zum Anblasen verwendete Gas wenigstens 20 % Helium umfaßt, während der Rest aus einem neutralen Gas oder einem Gemisch neutraler Gase besteht.

2. Verfahren nach Anspruch 1, dadurch gekennzeichnet, daß das zum Anblasen verwendete Gas mindestens 30 % Helium umfaßt.

3. Verfahren nach Anspruch 2, dadurch gekennzeichnet, daß das zum Anblasen verwendete Gas mindestens 90 % Helium umfaßt.

4. Verfahren nach einem der Ansprüche 1 bis 3, zum Zusammenfügen von Elementen mittels einer Schweißraupe (4), dadurch gekennzeichnet, daß das zum Anblasen verwendete Gas auf eine Temperatur zwischen 200 und 350°C erhitzt wird.

5. Verfahren nach einem der Ansprüche 1 bis 3, zum Bilden filamentartiger Bewicklungen (1), dadurch gekennzeichnet, daß das zum Anblasen verwendet Gas auf eine Temperatur von über 700°C erhitzt wird.

6. Verfahren nach einem der Ansprüche 1 bis 5, dadurch gekennzeichnet, daß das zum Anblasen verwendete Gas elektrisch (10, 10') erhitzt wird.

7. Verfahren nach Anspruch 5, dadurch gekennzeichnet, daß das zum Anblasen verwendete Gas auf eine zwischen 1000 und 3000°C liegende Temperatur erhitzt wird.

8. Verfahren nach Anspruch 7, dadurch gekennzeichnet, daß das zum Anblasen verwendete Gas mittels eines Plasmagenerators (10') erhitzt wird.

9. Verfahren nach Anspruch 7, dadurch gekennzeichnet, daß das zum Anblasen verwendete Gas mittels eines Solarofens (10') erhitzt wird.

10. Verfahren nach einem der Ansprüche 1 bis 9, dadurch gekennzeichnet, daß das zum Anblasen verwendete Gas aus einem Druckgasbehälter (9) stammt.
